# EUROPEAN PATENT APPLICATION

(11) **EP 3 315 759 A1**
(43) Date of publication of application: **02.05.2018**
(21) Application number: 17181034.4
(22) Date of filing: 12.07.2017
(51) Int. Cl.: F02M 37/22, F02C 7/14, F02C 7/224

(54) **ELECTRIC HEATING FOR FUEL SYSTEM COMPONENTS**

(30) Priority: 12.07.2016 US 201615208208
(71) Applicant: United Technologies Corporation, Farmington, CT 06032 (US)
(72) Inventor: STEARNS, Ethan K., Lebanon, CT Connecticut 06249 (US)
(74) Representative: Lees, Gregory Alexander

(57) **Abstract**

A fuel system (200) for use with a gas turbine engine (20) with a fuel flow (210) and an oil flow (222) includes a fuel-oil cooler (202) in fluid communication with the fuel flow and the oil flow, the fuel-oil cooler to transfer heat between the fuel flow and the oil flow, a fuel filter (204) associated with the fuel-oil cooler, the fuel filter in fluid communication with the fuel flow, and an electric heating element (230; 232) disposed adjacent to at least one of the fuel-oil cooler and the fuel filter.

## Description

### BACKGROUND

The present disclosure relates to fuel system components for gas turbine engines, more particularly to electrically heated fuel system components for gas turbine engines.

Fuel system components for gas turbine engines can be utilized in cold environments. In such uses, downstream components can be exposed to ice within the fuel flow.

Accordingly, it is desirable to provide electrically heated fuel system components that can minimize ice within the fuel flow.

### BRIEF SUMMARY

According to one embodiment, an electrically heated fuel filter includes a fuel filter, and an electric heating element disposed around the fuel filter.

In addition to one or more of the features described above, or as an alternative, further embodiments could include an insulation layer disposed around the electric heating element.

In addition to one or more of the features described above, or as an alternative, further embodiments could include a housing disposed around the electric heating element.

In addition to one or more of the features described above, or as an alternative, further embodiments could include that the housing is a metal housing.

According to one embodiment, a fuel system for use with a gas turbine engine with a fuel flow and an oil flow includes a fuel-oil cooler in fluid communication with the fuel flow and the oil flow, the fuel-oil cooler to transfer heat between the fuel flow and the oil flow, a fuel filter associated with the fuel-oil cooler, the fuel filter in fluid communication with the fuel flow, and an electric heating element disposed adjacent to at least one of the fuel-oil cooler and the fuel filter.

In addition to one or more of the features described above, or as an alternative, further embodiments could include an integrated fuel pump and control module to pressurize the fuel flow.

In addition to one or more of the features described above, or as an alternative, further embodiments could include that the integrated fuel pump and control module selectively provides a fuel return flow to the fuel-oil cooler.

In addition to one or more of the features described above, or as an alternative, further embodiments could include an oil bypass valve to bypass the oil flow beyond the fuel-oil cooler.

In addition to one or more of the features described above, or as an alternative, further embodiments could include that the electric heating element is disposed adjacent to the fuel-oil cooler.

In addition to one or more of the features described above, or as an alternative, further embodiments could include that the electric heating element is disposed adjacent to the fuel filter.

In addition to one or more of the features described above, or as an alternative, further embodiments could include that the electric heating element is disposed around the fuel filter.

In addition to one or more of the features described above, or as an alternative, further embodiments could include an insulation layer disposed around the electric heating element.

In addition to one or more of the features described above, or as an alternative, further embodiments could include a housing disposed around the electric heating element.

In addition to one or more of the features described above, or as an alternative, further embodiments could include that the housing is a metal housing.

According to one embodiment, a method to heat a fuel flow includes transferring heat between the fuel flow and an oil flow via a fuel-oil cooler, filtering the fuel flow via a fuel filter, electrically heating the fuel flow via an electric heating element disposed adjacent to at least one of the fuel-oil cooler and the fuel filter.

In addition to one or more of the features described above, or as an alternative, further embodiments could include pressurizing the fuel flow via an integrated fuel pump and control module.

In addition to one or more of the features described above, or as an alternative, further embodiments could include selectively providing a fuel return flow to the fuel-oil cooler via the integrated fuel pump and control module.

In addition to one or more of the features described above, or as an alternative, further embodiments could include bypassing the oil flow beyond the fuel-oil cooler via an oil bypass valve.

In addition to one or more of the features described above, or as an alternative, further embodiments could include that the electric heating element is disposed adjacent to the fuel-oil cooler.

In addition to one or more of the features described above, or as an alternative, further embodiments could include that the electric heating element is disposed adjacent to the fuel filter.

Other aspects, features, and techniques of the embodiments will become more apparent from the following description taken in conjunction with the drawings.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
Fig. 1 is a schematic, partial cross-sectional view of a turbomachine in accordance with this disclosure;
Fig. 2 is a schematic view of a fuel system for use with the turbomachine of Fig. 1; and
Fig. 3 is a partial cross-sectional view of a fuel filter for use with the fuel system of Fig. 2.

### DETAILED DESCRIPTION

Embodiments provide heated fuel flow utilizing electric heating elements. Electric heating of the fuel flow can prevent the formation of ice within the fuel flow in cold operating conditions.

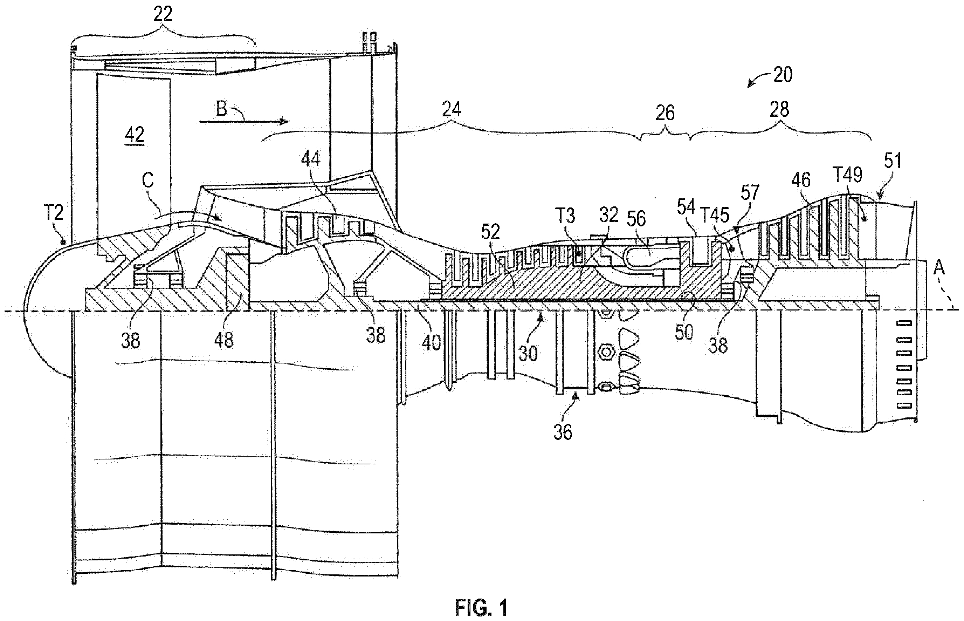

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame (MTF) 57 of the engine static structure 36 is arranged generally between the high pressure turbine 54 and the low pressure turbine 46. The MTF 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

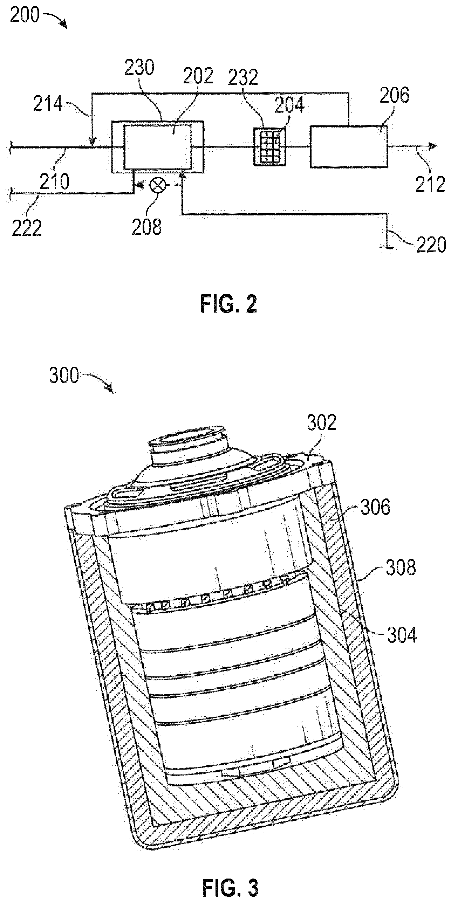

FIG. 2 illustrates a fuel system 200 for the gas turbine engine 20 of FIG. 1. In the illustrated embodiment, the fuel system 200 includes a fuel-oil cooler 202, a fuel filter 204, an electric fuel-oil cooler heater 230, and an electric fuel filter heater 232. In the illustrated embodiment, the electric heating components including the electric fuel-oil cooler heater 230 and the electric fuel filter heater 232 can prevent the formation of ice when a gas turbine engine 20 and the associated fuel flow is subject to low environmental temperatures (below - 50 degrees Celsius) during various phases of flight, including take off and cruise.

The fuel-oil cooler 202 is a heat exchanger to cool engine oil by transferring heat from the oil flow 220 to the fuel flow 210. The fuel-oil cooler 202 can be of any suitable construction and type. In the illustrated embodiment, the fuel-oil cooler 202 can receive the fuel flow 210 from a fuel tank, a return line, or any other suitable portion of the fuel system 200 and receive an oil flow 220 from an engine or any other suitable source. In the illustrated embodiment, the temperature differential between the oil flow 220 and the fuel flow 210 is utilized to remove heat from the oil flow 220 to transfer the heat to the fuel flow 210. Advantageously, while the fuel-oil cooler 202 cools the oil flow 222, the fuel-oil cooler 202 can further increase the temperature of the fuel flow 212 to prevent the formation of ice within the fuel flow 212. In certain embodiments or applications, transferring heat from the oil flow 220 to the fuel flow 210 may not sufficiently heat the fuel flow 212 to prevent the formation of ice.

In certain embodiments, the oil flow 220 may bypass the fuel-oil cooler 202 via the bypass valve 208. During operation of the bypass valve 208, the oil flow 220 does not pass through the fuel-oil cooler 202 to allow the oil flow 220 to retain heat. Further, during bypass operation the fuel flow 210 is not heated by the oil flow 220. After passing through the fuel-oil cooler 202 or bypassing the fuel-oil cooler 202 via the bypass valve 208, the oil flow 222 can be directed to an oil pump or any other suitable portion of the oiling system.

In the illustrated embodiment, after the fuel flow 210 passes through the fuel-oil cooler 202, the fuel flow 210 can be filtered by the fuel filter 204. In the illustrated embodiment, the fuel filter 204 can remove impurities, debris and other undesired objects from the fuel flow 210.

In the illustrated embodiment, the fuel flow 210 can be pressurized to flow through the fuel-oil cooler 202 and the fuel filter 204 by the integrated pump and control module 206. In the illustrated embodiment, the integrated fuel pump and control module 206 can selectively pump fuel through the fuel system 200. In certain embodiments, the integrated fuel pump and control 206 can further return fuel via the fuel return 214 to allow the fuel to flow through the fuel-oil cooler 202 again. Advantageously, the integrated fuel pump and control module 206 can allow for additional heating of the fuel flow 214 by allowing an additional pass through the fuel-oil cooler 202. After exiting the integrated fuel pump and control module 206, the fuel flow 212 can enter the engine or any other suitable part of the fuel system 200.

In the illustrated embodiment, the fuel system 200 can include electrical heating elements to prevent ice forming and entering sensitive downstream components, particularly during low temperature operation. In the illustrated embodiment, at least one of the fuel-oil cooler 202 and the fuel filter 204 can be electrically heated to provide supplemental fuel heating. In the illustrated embodiment, the fuel-oil cooler 202 includes an electric fuel-oil cooler heater 230 and the fuel filter 204 includes an electric fuel filter heater 232. In certain embodiments the fuel system 200 can include an electric fuel-oil cooler heater 230 and/or an electric fuel filter heater 232.

In the illustrated embodiment, the electric fuel-oil cooler heater 230 and the electric fuel filter heater 232 can be centrally controlled in response to atmospheric and operational conditions. In certain embodiments, the electric heating elements can supply approximately 1700 British Thermal Units per minute to the fuel flow to raise fuel temperatures approximately 20 degrees Fahrenheit (approximately 6.6 degrees Celsius). Advantageously, the electrical load required to heat the fuel flow is within normal capabilities of an electrical system typically associated with an aircraft. Further, in certain embodiments, the electrical load required to operate the electric fuel-oil cooler heater 230 and/or the electric fuel filter heater 232 can further provide engine load, which may provide higher engine oil temperatures. Therefore, during electric heating operations, the fuel flow 210 through the fuel-oil cooler 202 may experience greater oil flow 220 temperatures, allowing for greater heat transfer to the fuel flow 210.

In the illustrated embodiment, the fuel-oil cooler 202 includes an electric fuel-oil cooler heater 230 that is disposed around, on top of, or otherwise adjacent to the fuel-oil cooler 202. The electric fuel-oil cooler heater 230 is in thermal communication with the fuel-oil cooler 202 to electrically heat the fuel flow 210 therethrough. In the illustrated embodiment, the electrical fuel-oil cooler heater 230 can be removable from the fuel-oil cooler 202. In warmer anticipated operating conditions, the electrical fuel-oil cooler heater 230 can be removed. In certain embodiments, the electrical fuel-oil cooler heater 230 can be integrated with the fuel-oil cooler 202 and can modularly replace the fuel-oil cooler 202 to allow for greater fuel heating as required.

In the illustrated embodiment, the fuel filter 204 includes an electric fuel filter heater 232 that is disposed around, on top of, or otherwise adjacent to the fuel filter 204. The electric fuel filter heater 232 is in thermal communication with the fuel filter 204 to electrically heat the fuel flow 210 therethrough. In the illustrated embodiment, the electrical fuel filter heater 232 can be removable from the fuel filter 204. In warmer anticipated operating conditions, the electrical fuel filter heater 232 can be removed. In certain embodiments, the electrical fuel filter heater 232 can be integrated with the fuel filter 204 and can modularly replace the fuel filter 204 to allow for greater fuel heating as required.

Referring to FIG. 3, an integrated electrically heated fuel filter 300 is shown. In the illustrated embodiment, the electrically heated fuel filter 300 includes a fuel filter 302 and an electrical heating element 304. The electrical heating element 304 can selectively apply heat to the fuel flow therein to prevent the formation of ice in the fuel flow. Advantageously, the electrically heated fuel filter 300 can easily be removed or replaced with a non-heated fuel filter as needed.

In the illustrated embodiment, the fuel filter 302 can be any suitable fuel filter. In the illustrated embodiment, an electric heating element 304 is disposed around the fuel filter 302 to allow for thermal communication therebetween. The electric heating element 304 can selectively provide heat during cold conditions to prevent ice in the fuel flow as needed.

In certain embodiments, insulation 306 can be utilized to minimize heat loss from the electrically heated fuel filter 300. The insulation 306 can be any suitable material and construction. In the illustrated embodiment, the electrically heated fuel filter 300 can include a housing 308. The housing 308 can protect the other elements of the electrically heated fuel filter 300 while allowing for ease of handling. In certain embodiments, the housing 308 is formed of metal construction.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. An electrically heated fuel filter (300), comprising:
a fuel filter (302); and
an electric heating element (304) disposed around the fuel filter.

2. The electrically heated fuel filter (300) of claim 1, further comprising an insulation layer (306) disposed around the electric heating element (304).

3. The electrically heated fuel filter (300) of claim 1 or 2, further comprising a housing (308) disposed around the electric heating element (304).

4. The electrically heated fuel filter (300) of claim 3, wherein the housing (308) is a metal housing.

5. A fuel system (200) for use with a gas turbine engine (20) with a fuel flow (210) and an oil flow (222), the fuel system comprising:
a fuel-oil cooler (202) in fluid communication with the fuel flow and the oil flow, the fuel-oil cooler to transfer heat between the fuel flow and the oil flow;
a fuel filter (204) associated with the fuel-oil cooler, the fuel filter in fluid communication with the fuel flow; and
an electric heating element (230; 232) disposed adjacent to at least one of the fuel-oil cooler and the fuel filter.

6. The fuel system (200) of claim 5, further comprising an integrated fuel pump and control module (206) to pressurize the fuel flow (210), preferably wherein the integrated fuel pump and control module selectively provides a fuel return flow (214) to the fuel-oil cooler (202).

7. The fuel system (200) of claim 5 or 6, further comprising an oil bypass valve (208) to bypass the oil flow (222) beyond the fuel-oil cooler (202).

8. The fuel system (200) of claim 5, 6 or 7, wherein the electric heating element (230) is disposed adjacent to the fuel-oil cooler (202).

9. The fuel system (200) of claim 5, 6 or 7, wherein the electric heating element (232) is disposed adjacent to the fuel filter (204).

10. The fuel system (200) of claim 9, wherein the electric heating element (232) is disposed around the fuel filter (204) and preferably wherein the fuel system further comprises an insulation layer (306) disposed around the electric heating element.

11. The fuel system (200) of claim 10, further comprising a housing (308) disposed around the electric heating element (232), preferably wherein the housing is a metal housing.

12. A method to heat a fuel flow (210), the method comprising:
transferring heat between the fuel flow and an oil flow (222) via a fuel-oil cooler (202);
filtering the fuel flow via a fuel filter (204); and
electrically heating the fuel flow via an electric heating element (230; 232) disposed adjacent to at least one of the fuel-oil cooler and the fuel filter.

13. The method of claim 12, further comprising:
pressurizing the fuel flow via an integrated fuel pump and control module (206), and preferably selectively providing a fuel return flow (214) to the fuel-oil cooler (202) via the integrated fuel pump and control module.

14. The method of claim 12 or 13, further comprising:
bypassing the oil flow (222) beyond the fuel-oil cooler (202) via an oil bypass valve (208).

15. The method of claim 12, 13 or 14, wherein the electric heating element (230) is disposed adjacent to the fuel-oil cooler (202), or wherein the electric heating element (232) is disposed adjacent to the fuel filter (204).
